Europäisches Patentamt

European Patent Office

Office européen des brevets

(11) Publication number: **0 382 279**
**A2**

## (12) EUROPEAN PATENT APPLICATION

(21) Application number: **90200187.4**

(22) Date of filing: **26.01.90**

(51) Int. Cl.⁵: **G05B 19/10**

(30) Priority: **06.02.89 IT 1932589**

(43) Date of publication of application:
**16.08.90 Bulletin 90/33**

(84) Designated Contracting States:
**AT BE CH DE ES FR GB GR IT LI LU NL SE**

(71) Applicant: **PHILCO ITALIA S.P.A.**
**Via G. Marconi, 14/22**
**I-24030 Brembate Di Sopra (Bergamo)(IT)**

(72) Inventor: **Parisi, Corrado**
**Via del Coppo, 4**
**I-24030 Mozzo (Bergamo)(IT)**

(74) Representative: **Mittler, Enrico et al**
**c/o Marchi & Mittler s.r.l. Viale Lombardia, 20**
**I-20131 Milano(IT)**

(54) **Electronic system for program selection, in particular for washing, washing/drying and drying machines.**

(57) The electronic system for program selection is essentially constituted by a plurality of circuit blocks (4-17) related to functions and parameters of a machine under control (239), each of which is provided with at least one display unit (125-165) and is selectably activatable to enable in turn the activation of other of said blocks according to a sequence determined by the selections made by the operator. Said blocks (4-17) are connected so as to generate indications for the operator on the sequence of selections to be made and to avoid sequences which cause errors in the operation of the machine under control (239). The selection system alco comprises a logic unit (500) and a diagnostic unit (600) which receives signals from the machine (239). The selection system also includes a panel (1), provided with control means (40-84) suitable for enabling said circuit blocks (4-17), and display units (19-24, 26-39, 125-165).

Fig.1

EP 0 382 279 A2

## Electronic system for program selection, in particular for washing, washing/drying and drying machines.

The present invention relates to an electronic system for program selection, suitable in particular for washing, washing/drying and drying machines.

Normal washing and washing/drying machines on the market are provided with a limited selection of washing/drying programs and of the parameters related to these programs. Normally these programs are rigid and do not allow adaptation to specific and particular requirements of the user.

Moreover, in the machines on the market there is a possibility of error in the selection of the parameters related to a program (say, the selection of a high temperature during a program for washing delicate fabrics), without the machine giving any signal of this incorrect setting.

The object of the present invention is to accomplish an electronic system which offers the possiblity of selecting, in an appropriate sequence guided by the system itself, among a plurality of combinations of various parameters, so that each user can have his own personalized program suitable for his own requirements, and which is easy to use.

A further object is to accomplish a system capable of generating error signals, in case an inappropriate combination of parameters is selected.

Lastly a further object is that said selection system is capable of providing diagnostic functions, with an indication of the action to be taken to overcome possible malfunctions of a machine to which such selection system is connected.

Such object is attained by means of an electronic system for program selection, characterized in that it consists of a plurality of circuit blocks related to functions and parameters of a machine under control, each of which is provided with at least one respective display unit and is selectively activatable to enable in turn the operation of other of such blocks according to a sequence determined by the selections made by the operator, since said blocks are so connected as to generate indications for the operator on the sequence of selections to be made and avoid sequences which cause errors in the operation of the machine under control.

Preferably, said electronic selection system comprises a circuit block with a corresponding display unit capable of delaying the start of operations of the machine under control.

Preferably the display unit of the above delaying block is also used for error signals, to indicate the time required to the end of operations and to give information on the type of action to be taken in case of machine malfunction.

There is thus accomplished a program selection system for washing, washing-drying and/or drying machines which allows the selection of the preferred program by means of the choice of the parameters which are the most suitable for the specific user requirements, which is easy to use as the user is guided in its operation by the selection system itself. Said selection system is also capable of avoiding errors in setting-up the program and of providing diagnostic functions.

The characteristics of the present invention shall be made more evident by the following detailed description of one of its preferred embodiments, illustrated, as a non-limiting example, in the following drawings, wherein:

Fig. 1 shows the external panel of the program selection system;

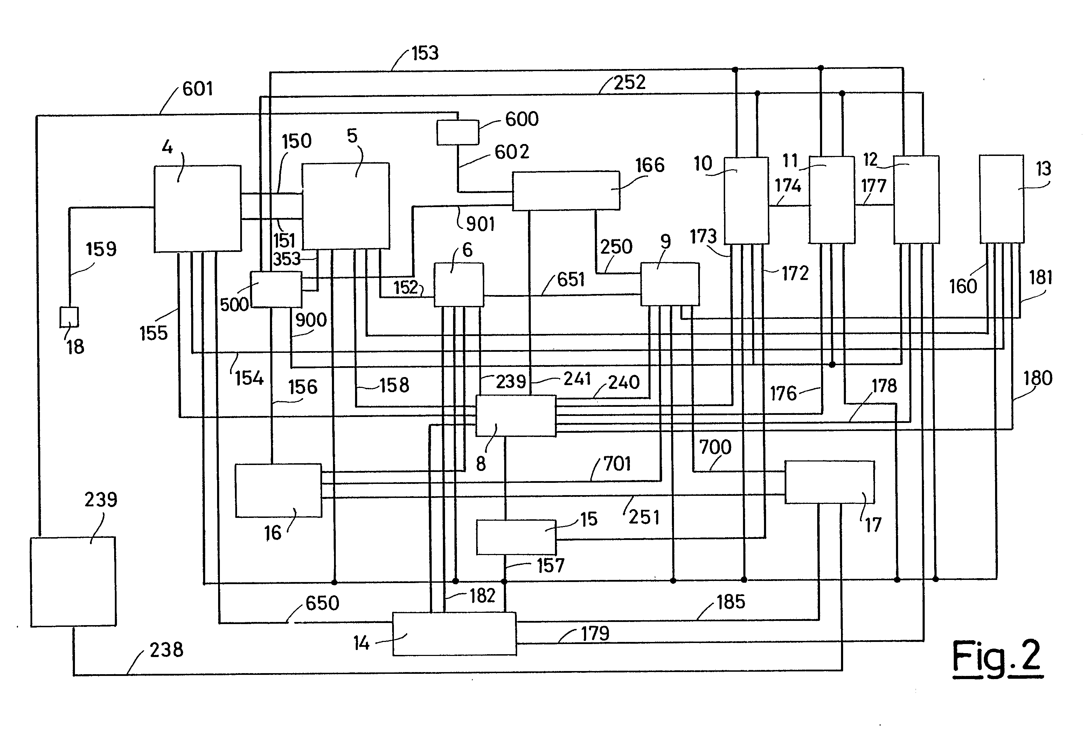

Fig. 2 shows the overall flow diagram of the circuit blocks constituting the selection system, which accomplish the functions related to the various elements of the external panel;

Fig.s 3, 4 and 5 show in detail the constitution of some of said circuit blocks of the selection system.

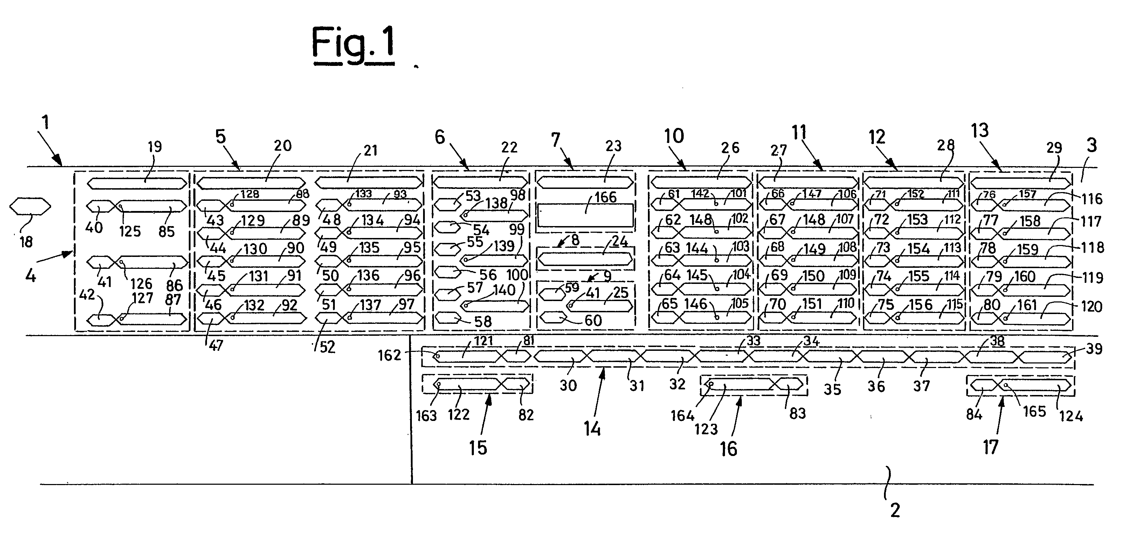

The external panel 1 (Fig. 1) consists of a first vertical part 2 and of a second part 3 at an angle.

On the panel 1 there is provided one start-up key 18, fortyfive selection keys 40-84, fortyone silk-screened indications 25, 85-124, fortyone photodiodes or leds 125-165; twenty illuminated indications 19-24, 26-39.

To the same panel 1 there are also operationally connected the circuit blocks 4-17, better highlighted in Fig.s 2-5.

More accurately with a program block 4 are associated keys 40-42, related to the "washing", "washing/drying", "drying" programs respectively, leds 125-127, silk-screened indications 85-87 and illuminated indication 19; with a selection block 5 are associated keys 43-52, related to the type of fabric to be processed, leds 128-137, indications 88-97 and illuminated indications 20 and 21; with a mode block 6 are associated keys 53-58, related to various operating modes (pre-washing, economic, etc.), indications 98-100, leds 138-140 and illuminated indication 22; with a display block 7 are associated a display unit 66 and an illuminated indication 23; with an error block 8 is associated an illuminated indication 24; with a delaying block 9 are associated an indication 25, a led 141 and keys 59 and 60; with a load block 10 are associated illuminated indication 26, keys 61-65, related to the weight of the different laundry loads, leds 142-146 and illuminated indications 101-105; with a temperature block 11 are associated an illuminated indication 27, keys 66-70, related to different operating temperatures, leds 147-151 and indications 106-110; with a speed block 12 are associated illuminated indication 28, keys 71-75, related to the different operating speeds, leds 152-156 and indications 111-115; lastly with a drying block 13 are associated indications 116-120, leds 157-161, keys 176-180, related to the different types of drying and illuminated indications 29.

Keys, leds and indications related to blocks 4-13 are located on part 3 at an angle of panel 1.

On the vertical part of the panel 1 are located key 82, indication 121, led 162 and illuminated indications 30-39, associated with a selection start block 14; key 82, led 163, indication 122, associated with a cancellation block 15; key 83, led 164 and indication 123, associated with a parameter change block 16; and lastly key 84, indication 124 and led 165, associated with a start operations block 17.

The selection system also comprises a logic unit 500, and a diagnostic unit 600, which receives signals from the machine 239 under control.

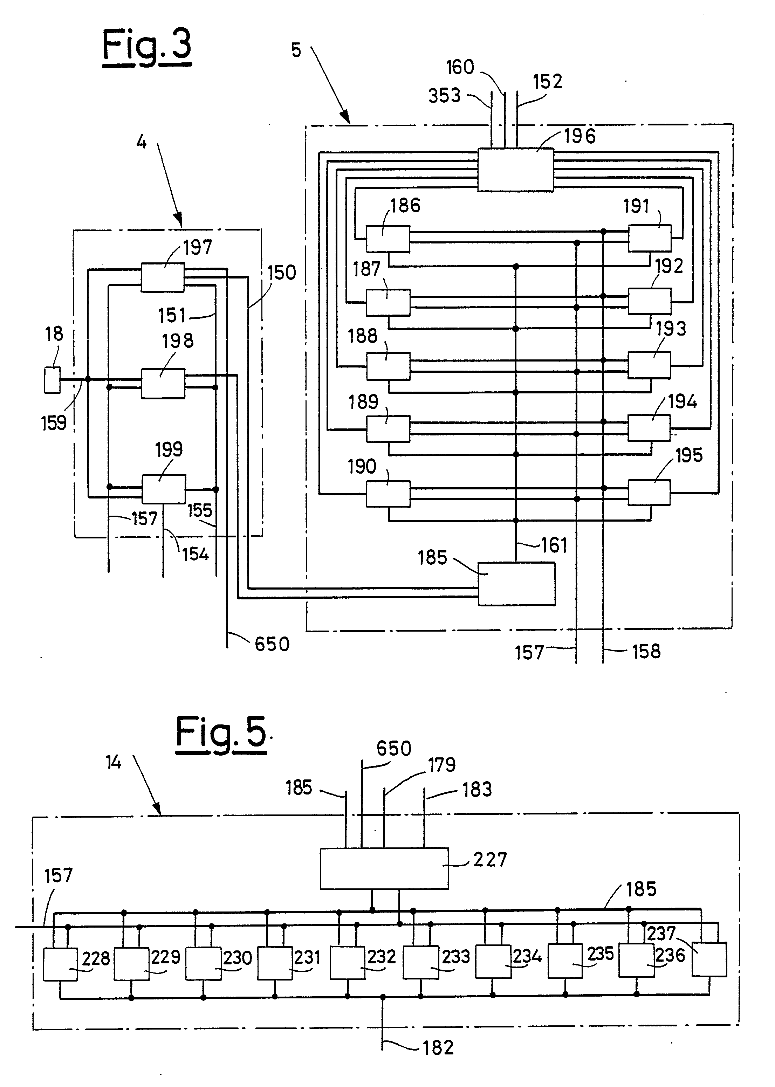

The details of blocks 4 and 5 are illustrated in Fig. 3, where it is seen that said block 4 is constituted essentially by circuits 197-199, each operated by a respective key 40-42 and each suitable for operating a respective led 125-127.

The block 4 receives a signal 159 from key 159 and sends two signals 150 and 151 to block 5.

Said block 5 (Fig. 3) is constituted essentially by circuits 186-195, each of which is associated with a respective key 43-52 and with a respective led 128-137, and by a first input gate 185 and by a second output gate 196.

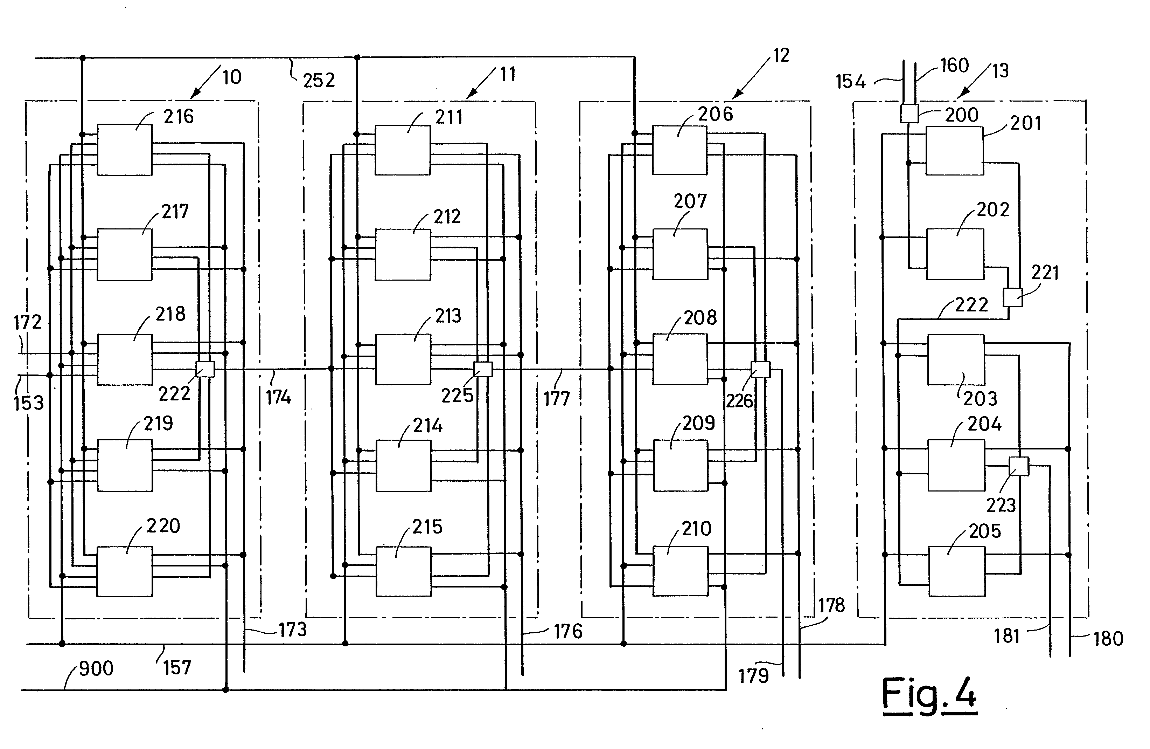

Fig. 4 shows in detail the components of the circuit blocks 10-13. Block 10 is constituted by five circuits 216- 220, each of which is associated with a key 61-65 and a led 142-146. Said block 10 is connected, by means of a gate 222 to block 11, constituted by five circuits 211-215, each of which is associated with a key 66-70 and a led 147-151.

Block 11 is in turn connected, by means of a gate 225, to block 12, constituted by five circuits 206-210, each of which is operated by one of the keys 71-75, and is suitable for operating a led 152-156; in block 12 there is also an output gate 226.

Lastly block 13 is essentially constituted by three gates 200, 223, 221 and by five circuits 201-205, each associated with a key 76-80 and a led 157-161.

Block 14 is illustrated in detail in Fig. 5, where it is seen that said block consists essentially of a circuit 227, associated with key 81 and led 162, and of ten gates 228-237, each of which is associated with a respective illuminated indication 30-39.

The operating mode of the selection system shall be illustrated with reference to Fig.s 2-5.

The first operation to be performed to drive the selection system is to press the on key 18; this operation, by means of the connection 159, activates the circuits 197-199 which in turn activate the illuminated indication 19, which for the moment will be flashing, and the three leds 125-127, which will also be flashing.

At this point the user selects one of the three program selection keys 40-42. Led 125-127 corresponding to the operated key and indication 19 will remain on with a non-flashing light, while the other two leds of block 1 will be turned off.

The subsequent operating stages of the selection system depend on which of the three keys 40-42 has been pressed.

If key 40 has been pressed (corresponding to the "washing" program), a signal 150 enters gate 185 of block 5 (Fig.s 2 and 3). Moreover, a signal 650 enters block 14.

Each of the circuits 186-195 receives an enabling signal 161, generated by gate 185 in response to signal 150. Illuminated indications 20, 21 and the ten leds 128-137 will now be turned on with a flashing light. The flashing led 162 of block 14 will also be turned on.

At this point the user may select one of the ten washing programs, by pressing one of the keys 43-52, or he may cause the machine to perform only some washing stages, pressing key 81, until the illuminated indication 30-39 corresponding to the user's desires comes on. At this point it is sufficient to press the start key 84 for machine 239 to start.

If the user presses one of the ten keys 43-52, the corresponding circuit 186-195 generates a respective group of signals 162-171, which, through the gate 196, allows block 5 to send a signal 152 to mode block 6, causing the corresponding leds 138-140 and the indication 22 to flash.

It is then necessary to press one of the keys 53, 54, the first of which activates the pre-washing function and the second disactivates such function, one of the keys 55, 56, the first to activate the economy function, the second to disactivate it, and one of the keys 57, to activate the "stop with water" function or 58 to disactivate this function.

If one of the function activation keys 53, 55, 57, has been pressed, the corresponding leds 138, 139, 140 remain on with a non-flashing light; if one of the disactivation keys 54, 56, 58, 91, has been pressed, the corresponding leds 138, 139, 140 go off.

After pressing the three selected keys of block 6, the indication 22 comes on with a non-flashing light.

At this point block 6 sends a signal 651 to the delaying block 9, causing the corresponding led 141 to flash.

Pressing one of the keys 43-52 also causes the turning off of nine of the leds 128-137, except the one related to the pressed key, which remains on with a non-flashing light, just as indication 20 (if the pressed key forms part of the group 43-47) or indication 21 (if one of the keys 48-52 has been pressed).

Pressing one of the keys 43-52 also causes the sending of a signal 153 to the logic unit 500. This, in turn sends a signal 353 to blocks 10, 11, 12. In response to this signal only one led 142-146 of block 10 comes on, only one led 147-151 of block 11, and only one led 152-156 of block 12.

The choice of which led comes on is performed by the logic unit 500 which, on the basis of which program has been set, by means of keys 43-52, selects the washing parameters more compatible with said program.

If the pressed key is key 42 (corresponding to the "drying" program), a signal 154 enters gate 200 of block 13 (Fig. 4).

In response to signal 154, gate 200 generates an enabling signal 224, which is carried to the circuits 201 and 202 of block 13. Signal 224 causes the flashing of indication 29 and of leds 157 and 158. Pressing one of the keys 76, 77 the corresponding led comes on with a non-flashing light and the other is turned off. Gate 221 then sends a signal 222 to the three circuits 203-205. Pressing one of the keys 78-80 causes the turning on with a fixed light of the corresponding led and of the indication 29 the turning off of the leds corresponding to the two keys which have not been pressed, and the sending of a signal 181, by means of gate 223, to delaying block 9.

Lastly if key 41 has been pressed (corresponding to the program "washing/drying", a signal 151 enters gate 185. The subsequent stages coincide with the first stages related to the "washing" program selection described above; gate 196 of block 5 does not, however, generate signal 152, but signal 160 which enters gate 200 of block 13. From this point on the same stages follow related to the "drying" program which has just been described.

When delaying block 9 receives signal 181 from block 13 or signal 651 from block 6, led 141 comes on with a flashing light.

Pressing disactivation key 60 of the delaying unit, led 141 is turned off, and led 165 of start block 17 comes on with a flashing light. But if the delay activation key 59 is pressed instead, led 141 remains on with a non-flashing light, and block 9 sends a signal 250 to display unit 166, a temporal indication appears on the key related to the "delay" desired for the start of washing/drying operations. Subsequent pressing of key 59 cause variations in the indication on display 166 (for example, 1HR, 2HRS..).

From the very first pressing of key 50 or of key 60, led 165 of start block 17 activated by a signal 700 as well as led 164 of change block 16 activated by a signal 701, come on with a flashing light

At this point, if the program setting performed automatically by the selection system is accepted by the user, it is sufficient to press key 84, and machine 239 starts operations.

But if it is required to change the setting of parameters or functions to select a personalized program, key 83 of change block 16 must then be pressed. A signal 156 is sent to logic unit 500, and an enabling signal 172 is sent to each of the circuits 216-220 of block 10. At the same time a signal 251 causes led 165 of start block 17 to be turned off. Logic unit 500 sends a signal 252 to each of the circuits 206-220 of blocks 10-12. This signal causes only some of the leds related to block 10 to be turned on; in fact, the logic of unit 500 only causes those leds to be turned on that are related to parameters compatible with the selected program (that is, on the basis of which of the keys 40-42 has been pressed).

The value of the load desired is selected by pressing one of the keys of block 10 whose led is flashing. Once the selection has been made, the corresponding led and indication 27 come on with a non-flashing light.

Block 10 sends an enabling signal 174 to circuits 211-215. In block 11 also those leds corresponding to the acceptable combinations come on, as well as indication 27.

Once the temperature selection has been made by pressing one of the keys 66-70, selected among those with a corresponding flashing led, the led associated with that key and indication 27 remain on with a non-flashing light, and the other leds of block 11 are turned off.

Lastly, an enabling signal 177, generated by gate 225, enters circuits 206-210 of block 12. Here again only some of the leds come on, on the basis of the information of signal 252, and indication 28.

Speed is selected by pressing one of the keys 71-75, selected among those whose associated led is flashing. If during this stage of parameter selection the user attempts to make an incorrect selection, by pressing a key corresponding to a turned-off led, the circuits 206-220 of blocks 10-12 send a signal 900 to the logic unit 500, which generates an error message on the display 166, by means of a signal 901. The led related to the pressed key and indication 28 are turned on with a non-flashing light, the other leds are turned off, and gate 225 sends a signal 179 to the start selection block 14.

Led 162 flashes, until key 81 is pressed. A related circuit 227 (Fig. 5) causes the turning on in sequence of a plurality of illuminated indications 30-39, each associated with a related gate 228-237. Each illuminated indication indicates a stage of the washing/drying cycle.

When the illuminated indication is on, corresponding to the user desires, led 165 of start block 17 is turned on, and it is possible to press the related key 84, which by means of a signal 238 start the machine 239.

If, during the stage wherein the program is set, the user realizes that he has made an incorrect or undesired selection, he may press key 82 of cancellation block 15, which is connected to blocks 4-6, 9-17 by a group of connections 157, whereby the last selection made may be cancelled. Led 163 starts to flash when key 82 is pressed, and is turned off only when the new function is set.

Error block 7 receives at each instant from blocks 4-6, 9-14 a respective group of signals 155, 158, 239, 240, 173, 176, 178, 180, 182; these signals are processed by error block 7, which is capable of comparing these signals and identifying errors in the setting of the selected program; if block 7 realizes that there is an error, it sends a signal 241 to the display unit 166, which thus displays an error signal.

Lastly the diagnostic unit 600 receives, during operation of the machine 239, signals 601 coming from the machine 239 itself. If there is any malfunction unit 600 sends signals 602 to the display unit 166, which thus displays the action to be taken to overcome the malfunction.

## Claims

1. Electronic system for program selection, characterized in that it is constituted by a plurality of circuit blocks (4-17) related to functions and parameters of a machine under control (239), each of said blocks (4-17) being provided with at least one respective display unit (125-166) and it being selectably activatable with control means (18, 40-84) to enable in turn the activation of other of said blocks (4-17) according to a sequence determined by the selections made by the operator, being said blocks (4-17) connected so as to generate indications for the operator regarding the sequence of selections to be made and to avoid sequences which may cause errors in the operation of the machine under control (239).

2. Electronic system for program selection according to claim 1, characterized in that one of said blocks (4-17) is constituted by a program block (4) for the selection of the type of operation of the machine.

3. Electronic system for program selection according to claim 2, characterized in that another of said blocks (4-17) is constituted by a program selection block (5) which may be enabled by said program block (4) for the selection of the operational program of the machine.

4. Electronic system for program selection according to claim 3, characterized in that other of said blocks (4-17) are constituted by parameter selection blocks (10-13) which may be enabled by said program block (4) and by said selection block (5) for the selection of the different operational parameters of the machine.

5. Electronic system for program selection according to claim 1, characterized in that yet another of said blocks (4-17) is constituted by a block (16) for changing the selected parameters.

6. Electronic system for program selection according to claim 1, characterized in that yet another of said blocks (4-17) is constituted by a block (15) for cancelling the prior activation of said blocks (4-17).

7. Electronic system for program selection according to claim 1, characterized in that yet another of said blocks (4-17) is constituted by a block (14) for selecting the start of the program.

8. Electronic system for program selection according to claim 1, characterized in that one of said blocks (4-17) is constituted by a delaying block (7) capable of delaying the start of the selected program.

9. Electronic system for program selection according to claim 1, characterized in that it includes a control panel (1) comprising said display units (125-166) and said control means (18, 40-84).

10. Electronic system for program selection according to claim 1, characterized in that it includes a logic unit (500), which runs the operation of the electronic selection system.

11. Electronic system for program selection according to claim 1, characterized in that it includes a diagnostic unit (600), which receives signals from said machine under control (239).

Fig.1

EP 0 382 279 A2

Fig.2

EP 0 382 279 A2

Fig.3

Fig.5

Fig.4